# EUROPÄISCHE PATENTSCHRIFT

(11) **EP 0 623 568 B1**
(45) Veröffentlichungstag und Bekanntmachung des Hinweises auf die Patenterteilung: **06.08.1997**
(21) Anmeldenummer: 94106788.6
(22) Anmeldetag: 30.04.1994
(51) Int. Cl.: C04B 33/32, C04B 33/16

(54) **Verfahren und Vorrichtung zur gleichzeitigen Herstellung von grobkeramischen Erzeugnissen und Brenngas**
Process and apparatus for the simultaneous production of coarse ceramic products and combustion gas
Procédé et dispositif pour la production simultanée de pièces céramiques grossières et de gaz combustible

(30) Priorität: 03.05.1993 DE 4314466
(43) Veröffentlichungstag der Anmeldung: 09.11.1994
(73) Patentinhaber: DBI DEUTSCHES BRENNSTOFFINSTITUT ROHSTOFF & ANLAGENTECHNIK GmbH, 09599 Freiberg (DE); INSTITUT FÜR BAU- UND GROBKERAMIK GmbH, 99423 Weimar (DE)
(72) Erfinder: Eidner, Dieter, Dr. Dipl.-Ing., D-09599 Freiberg (DE); Hohmann, Hans, Dr. Dipl.-Ing., D-99423 Weimar (DE); Weihrauch, Fritz, Dr. Dipl.-Ing., D-07747 Jena (DE); Rotter, Fred, Dipl.-Ing., D-99427 Weimar (DE); Mottischka, Wilhelm, Dipl.-Ing., D-09599 Freiberg (DE); Mehnert, Eberhard, Dr. Dipl.-Chem., D-09599 Freiberg (DE); Göhler, Peter, Dr. Dipl.-Ing., D-09599 Freiberg (DE); Kadlubowski, Wolfgang, Dipl.-Ing., D-09599 Freiberg (DE)
(74) Vertreter: Lorenz, Werner, Dipl.-Ing.

(56) Entgegenhaltungen:
- EP-A- 0 039 798
- DE-A- 3 238 328
- DE-A- 3 821 443
- DE-C- 4 013 505
- FR-A- 2 503 136

## Beschreibung

Die Erfindung betrifft ein Verfahren und die zugehörige Vorrichtung zur komplexen Verwertung von Gemischen aus kohligen bzw. brennbaren organischen Substanzen und Ton unter Gewinnung eines Brenngases, wobei gleichzeitig grobkeramische Erzeugnisse bzw. Bauteile erzeugt werden.

Es sind weit verbreitet Vorkommen von braunkohle- oder torfhaltigen Tonen bzw. von Braunkohlen mit sehr hohen Beimengungen toniger Materialien bekannt. Typisch sind beispielsweise Gemische mit 10 - 60 % kohligen Substanzen und 10 - 80 % tonigen Substraten, deren komplexe wirtschaftliche Nutzung derzeit nicht möglich ist.

Eine mechanische Trennung solcher Gemische ist mit erheblichen technischen Problemen und großem Aufwand belastet und deshalb industriell nicht üblich. Ihr direkter Einsatz als Brennstoff oder Vergasungsbrennstoff scheitert am hohen Gehalt mineralischer Bestandteile, die Nutzung als Rohstoff für die Erzeugung geformter Baustoffe oder grobkeramischer Erzeugnisse am hohen Gehalt an brennbarer organischer Substanz.

Mit den üblichen Verfahren zur Herstellung gebrannter Ziegel sind nur Tone mit kohligen Bestandteilen bis zu etwa 10 % beherrschbar. Setzt man Tone mit hohen Anteilen an brennbaren Substanzen ein, so führt der unmittelbar am Brenngut ablaufende Abbrand der organischen Substanz zu Überhitzungen und zu einer für die Qualität des gebrannten Gutes ungünstigen Aufheizkurve. Außerdem kommt es durch Pyrolyse des organischen Materials in bestimmten Zonen eines Durchlaufofens oder in bestimmten Phasen eines satzweisen Brandes zur Emission von Schwelgasen und CO-haltigen Rauchgasen.

Gemische aus organischen Substanzen und Ton fallen weiter im Zusammenhang mit der Entsorgung von festen Rückständen der Pyrolyse von Müll und anderen kohlenstoffhaltigen Produkten an. Zielstellung der thermischen Behandlung dieser Gemische ist dabei der Abbrand der organischen Substanzen und die Erzeugung grobkeramischer Erzeugnisse und Baustoffe unter eluatsicherer Einbindung der umweltrelevanten Schwermetalle.

Diese Gemische sind gleichfalls in der Regel nicht problemlos in bekannten Verfahren zur Herstellung grobkeramischer Erzeugnisse oder Baustoffe einsetzbar.

In der DE-OS 26 41 674 und der DE-AS 30 14 905 ist vorgeschlagen worden, die brennbares Material enthaltenen Roh-Formlinge vor dem Brand einer Pyrolyse ("Entgasung") bei relativ niedrigen Temperaturen (z.B. 350 °C nach DE-AS 30 14 905) zu unterwerfen. Die Beheizung in der Pyrolysezone soll dabei indirekt über Heizflächen an Wänden und Decke des Ofens oder durch einen umlaufenden, in einem Wärmetauscher aufgeheizten Gas-Kreislaufstrom erfolgen. Die entbundenen Schwelgase werden als zusätzliches Heizgas beim nachfolgenden Brand des Gutes verwendet, können aber grundsätzlich auch für andere Verbraucher abgezweigt werden. Das Gas ist jedoch mit teerigen Bestandteilen belastet und schwankend in seiner Qualität, was seine Einsatzmöglichkeiten stark einschränkt oder aufwendige Reinigungsprozesse fordert. Mit der Pyrolyse können allenfalls die sogenannten "flüchtigen Bestandteile" des Brennstoffes freigesetzt werden. Der überwiegende Teil des Energieinhaltes der kohligen Bestandteile bleibt aber mit dem "fixen bzw. festen Kohlenstoff" im Formling. Der Abbrand dieses Kohlenstoffes während des Brennprozesses bietet nach wie vor die Gefahr der Ausbildung eines ungünstigen Aufheizverlaufes der Formlinge und deren Überhitzung. Der zulässige Anteil an brennbarer Substanz im Rohling bleibt deshalb beschränkt.

Es ist in SU-UHS 726059 ein Verfahren zur Wärmebehandlung von keramischen Erzeugnissen aus kohlehaltigen Rohstoffen vorgeschlagen worden, das in einem für eine Ziegelherstellung bekannten Tunnelofen ein brennbares Gas durch Vergasung mittels eines Luft-Wasserdampf-Gemisches bei 600 bis 800 °C erzeugt und dessen Weiterleitung in die nachfolgende Gasbrennzone und Verbrennung bei maximal 1200 °C vorsieht.

Nachteilig bei dieser Verfahrensweise ist einerseits der Anfall von ungereinigten Schwel- und Reaktionsgasen und andererseits die bei den Brenntemperaturen mögliche Fluor- und Schwefelemission sowie Schmelzbildung an keramischen Scherben. Weiterhin nachteilig ist die geringe Formlingstandfestigkeit während der Entgasung infolge Anwesenheit von Sauerstoff.

Aus der DD 72487 ist ein Verfahren zum pneumatisch-hydrothermalen Brennen geformter silikatischer Baustoffe bekannt. Nach diesem Verfahren erfolgt der Brand in einer satzweise bzw. chargenweise betriebenen Kammer in einer Wasserdampfatmosphäre, die durch Wasserentbindung in der Trocknungs- und Brennphase entsteht. Die Wärmezufuhr erfolgt über Heizflächen an den Kammerwänden, beispielsweise in Form elektrischer Heizleiter.

Praktische Erfahrungen aus dem Betrieb industrieller Anlagen, die nach diesem Verfahren arbeiten, haben gezeigt, daß der zulässige Brennstoffanteil im Rohling auf 1 Ma.-% beschränkt ist.

Gemäß DD 229820 wurde vorgeschlagen, in einer Kammer zum hydrothermalen Brennen Rohlinge mit hohem Gehalt an brennbaren Substanzen einzusetzen, parallel zur Aufheizung des mineralischen Anteiles die brennbaren Substanzen einer Entgasung und einer Vergasung durch Umsatz mit der wasserdampfhaltigen Atmosphäre zu unterwerfen und dabei ein brennbares Gas zu gewinnen.

Das Verfahren ist jedoch dadurch in seiner Leistungsfähigkeit beschränkt und wirtschaftlich belastet, daß ein erheblicher Aufwand für die Installation und Beheizung der Hochtemperaturheizflächen im Ofenraum und für die Gewährleistung der Wärmeübertragung von den Heizflächen zum Brenngut zu treiben ist.

Aus der FR-A 2 503 136 sind ein Verfahren und eine Vorrichtung zur gleichzeitigen Herstellung von grobkeramischen Erzeugnissen und Brenngas bekannt, wobei die zu bearbeitenden Rohlinge bei Temperaturen bis zu etwa 200 °C aufgeheizt und getrocknet werden und der durch die Trocknung entbundene Wasserdampf von einem Wälzgas aufgenommen wird. In einem späteren Verfahrensschritt wird bei einer Temperatur zwischen 700 °C und 900 °C eine Pyrolyse durchgeführt.

Bekannt sind weiter eine Vielzahl von Verfahren zur Vergasung fester Brennstoffe durch Umsatz mit Wasserdampf bzw. einer wasserdampfhaltigen Atmosphäre mit dem Ziel der Gewinnung von Heiz-, Reduktions- oder Synthesegas. Der Gehalt an mineralischen Bestandteilen in der Einsatzkohle für solche Verfahren ist -abhängig von der Technologie- bestenfalls auf 35 bis 40 % beschränkt. Die mineralischen Bestandteile verbleiben in Form von Asche oder Schlacke als Vergasungsrückstand. Ihre Verwertung als Baustoff ist nur in Einzelfällen, z.B. als Zuschlagstoff, möglich.

Spezielle Verfahren zur Vergasung von z.B. Aufbereitungsrückständen mit höheren Gehalten an mineralischen Komponenten gestatten lediglich die Produktion eines heizwertarmen Brenngases. Für die Verwertung der mineralischen Rückstände gilt das oben Gesagte.

Der vorliegenden Erfindung liegt die Aufgabe zugrunde, ein Verfahren und eine Vorrichtung zu schaffen, die eine komplexe Verwertung von Gemischen aus kohligen bzw. brennbaren organischen Substanzen und Ton, insbesondere natürlichen Kohletonen und Mischungen aus den festen Rückständen der Pyrolyse von Abfallstoffen und Ton oder Kohleton bzw. mit organischen Kontaminationen belasteten Substraten durch Gewinnung von teerfreien CO- und H₂-haltigem Brenngas und geformter grobkeramischer Erzeugnisse und Baustoffe wie z.B. Ziegel gestattet, ohne daß Abprodukte wie Aschen, staubhaltiger Teer und organisch verunreinigte Abwässer anfallen, und die weiter die bekannten Vorteile eines hydrothermalen Brennprozesses in wasserdampfhaltiger Atmosphäre zu nutzen gestattet.

Erfindungsgemäß wird diese Aufgabe durch die im Anspruch 1 genannte Merkmalskombination gelöst.

Erfindungsgemäß findet dabei in der Phase der Ent- und Vergasung gleichzeitig die keramische Verfestigung und überraschenderweise auch bereits eine eluatsichere Einbindung von umweltrelevanten Schwermetallen statt. In der Phase der Ent- und Vergasung freigesetzte, umweltrelevante Kohlenwasserstoffe wie z.B. Teerdämpfe werden im Zuge der Aufheizung des im Kreislauf geführten Gases, das als Wälzgas bezeichnet wird, zerstört.

Eines der wesentlichen Merkmale der vorliegenden Erfindung liegt somit darin, daß man einerseits trotz der vorstehend geschilderten Problematik Baustoffe herstellen kann und andererseits brennbares Gas gewinnt, das man als sogenanntes Wälzgas im Kreislauf führt und zur Aufheizung verwendet. Gleichzeitig werden auf diese Weise Umweltprobleme durch ein Austreten von Schadstoffen verhindert.

Zur weiteren Vervollständigung der eluatsicheren Einbindung der umweltrelevanten Schwermetalle kann nach Anspruch 2 im Anschluß an die Phase c) und vor der Kühlphase d) eine Nacherhitzung der Rohlinge auf über 900 °C erfolgen.

Für die keramische Verfestigung sollte ein Mindestgehalt an Wasserdampf im Gas vorhanden sein. Daher ist gemäß Anspruch 3 vorgeschlagen, daß dem Wälzgas Wasserdampf in einer solchen Menge zugeführt wird, daß in der Phase c) ein Wasserdampfgehalt von vorzugsweise 30 % eingehalten wird.

Diese zur Sicherung einer Wasserdampfkonzentration von vorzugsweise größer 30 Vol.-% in der Phase c) erforderliche Zuführung von Wasserdampf kann gemäß Anspruch 4 dadurch erfolgen, daß dem Wälzgas vor Eintritt in den Wälzgaserhitzer Wasser oder Wasserdampf zugeführt wird.

Eine weitere Zuführung von Dampf kann gemäß Anspruch 5 dadurch erfolgen, daß bei der Kühlung der verfestigten Rohlinge Wasser in die Kammer eingedüst wird.

Das aus dem Wälzgaserhitzer austretende Wälzgas enthält aufgrund der hohen Erhitzungstemperaturen keine kondensierbaren und umweltrelevanten Kohlenwasserstoffe, deshalb kann gemäß Anspruch 6 ein Teilstrom des Wälzgases nach Passieren des Wälzgaserhitzers aus dem Kreislauf als Überschußgas oder Brenngas abgezogen und einer weiteren Verwendung zugeführt werden, wobei in der Kammer ein ausreichend hoher Überdruck konstant eingehalten wird.

Dem im Wälzgaserhitzer aufgeheizten Wälzgas kann zur weiteren Temperaturerhöhung entsprechend den Ansprüchen 7 bis 9 Sauerstoff in Form von technischem Sauerstoff oder Luft zugesetzt werden.

Bei den Wälzgastemperaturen von 900 - 1000 °C am Austritt des Wälzgaserhitzers setzt sich der Sauerstoff sofort mit den brennbaren Bestandteilen des Wälzgases um. Der Wälzgaserhitzer kann gemäß den Ansprüchen 10 und 11 regenerativ betrieben und mit dem aus dem Kreislauf entnommenen Teilstrom des Wälzgases ohne vorherige Kühlung beheizt werden.

Falls der aus dem Kreislauf entnommene Teilstrom des Wälzgases umweltrelevante Schadstoffe wie z.B. H₂S und HCl enthält, so kann dieser Teilstrom vor der weiteren Verwendung als Brenngas gemäß Anspruch 12 gekühlt und einer Gasreinigung unterworfen werden.

Die Aufheizung des Wälzgases kann gemäß Anspruch 13 auch in einem Gaswandler nach der DE 33 17 977 durch Teilverbrennung mit Luftsauerstoff erfolgen. Ein solcher Gaswandler arbeitet im Gegensatz zu den regenerativ betriebenen Wälzgaserhitzer kontinuierlich. Dies ist hinsichtlich der Betriebsführung sehr vorteilhaft. Die Teilverbrennung des Wälzgases im Gaswandler führt jedoch zu einer Minderung des Brenngasheizwertes.

Die Rohlinge können entweder nach Anspruch 14 im Ofenraum bzw. in den Kammern ruhen und die einzelnen Phasen des Verfahrens zeitlich nacheinander durchlaufen oder nach Anspruch 17 durch einen Ofenraum geführt werden und die einzelnen Phasen des Verfahrens nacheinander jeweils an einer für die Phase charakteristischen Stelle des Ofenraumes durchlaufen.

Im Fall, daß die Rohlinge nach Anspruch 14 im Ofenraum bzw. der Kammer ruhen, werden nach Anspruch 15 mehrere Kammern gleichzeitig, aber zeitlich so versetzt betrieben, daß sich zu jedem Zeitpunkt mindestens eine der Kammern in der Phase c) befindet. In diesem Fall wird weiterhin das Wälzgas nach Verlassen der Kammern gemäß Anspruch 16 zusammengeführt, gemeinsam erhitzt und wieder auf die Kammern verteilt.

Eine Vorrichtung zur Durchführung der in den Ansprüchen 1 bis 17 beschriebenen Verfahren ist in Anspruch 18 beschrieben.

Die in der Vorrichtung eingesetzten Kammern sind mit mindestens einer gasdicht verschließbaren Öffnung zum Beschicken und Entleeren sowie entsprechenden Stutzen zur Zu- und Abführung des Wälzgases und zur Zuführung des Kühlwassers ausgestattet.

Zur regenerativen Aufheizung des Wälzgases werden nach Anspruch 19 im Wechsel betriebene Cowper eingesetzt.

Ein Cowper ist ein hoher, feuerfest ausgekleideter Turm, der mit keramischem Material, das zur Wärmespeicherung dient, gefüllt ist.

Bei Einsatz eines Gaswandlers zur Aufheizung des Wälzgases erfolgt gemäß Anspruch 20 die Zuführung der Vergasungsluft und des aufzuheizenden Wälzgases über in den Zuführungsstutzen des Gaswandlers angeordnete Injektormischer unter Nutzung der Vergasungsluft als Treibmittel. Diese Injektoren stellen gleichfalls Fördereinrichtungen für das Wälzgas dar.

Im Ergebnis des vorgestellten Verfahrens und der zugehörigen Vorrichtung erhält man geformte grobkeramische Baumaterialien z.B. Ziegel mit einer erstrebenswerten, da wärmedämmenden Ziegelrohdichte und eluatsicher eingebundenen umweltrelevanten Schwermetallen sowie parallel dazu ein gereinigtes Brenngas.

Nachstehend sind anhand der zugehörigen Zeichnungen Ausführungsbeispiele der Erfindung prinzipmäßig beschrieben.

Es zeigt:
- Fig. 1: eine schematische Darstellung des Verfahrens ohne Nacherhitzung unter Verwendung regenerativ betriebener Wälzgaserhitzer;
- Fig. 2: eine schematische Darstellung des Verfahrens ohne Nacherhitzung unter Verwendung eines Gaswandlers nach DE 33 17 977 zur Wälzgaserhitzung;
- Fig. 3: eine schemtische Darstellung des Verfahrens mit Nacherhitzung unter Verwendung eines Gaswandlers nach DE 33 17 977 zur Wälzgaserhitzung.

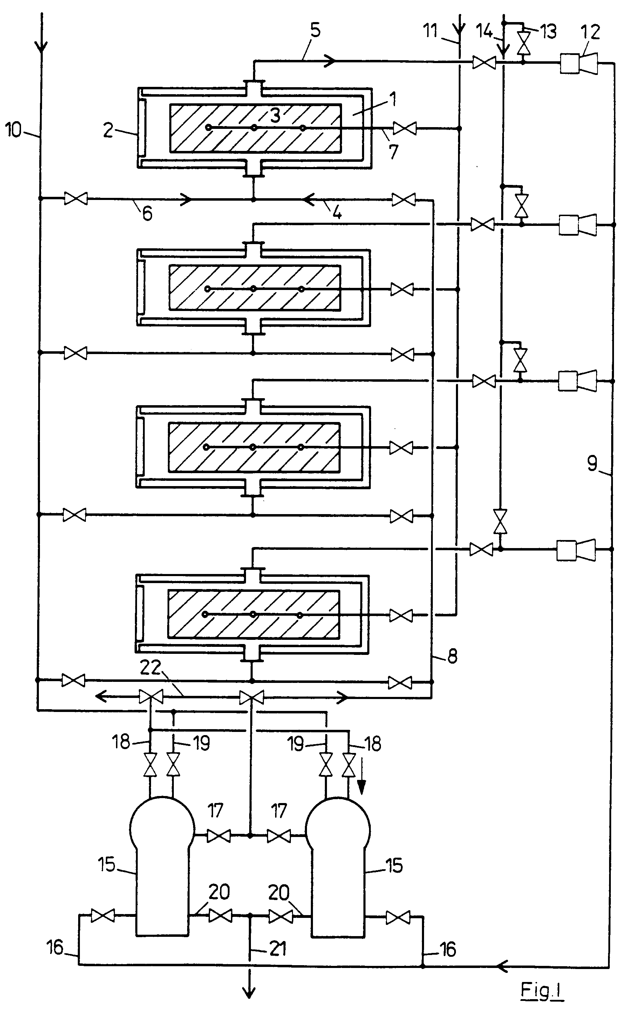

In Fig. 1 ist eine Anlage mit vier Kammern 1, in denen der Besatz in Form von Rohlingen während der thermischen Behandlung ruht, und einem Cowper-Paar zur Wälzgaserhitzung dargestellt. Die Rohlinge können in ihrer Größe der Größe von Ziegelsteinen entsprechen.

Jede Kammer ist ausgestattet mit:
- einer Öffnung 2 zum Einbringen des Besatzes 3
- einer Zuführungsleitung 4 für Wälzgas
- einer Abführungsleitung 5 für Wälzgas
- einer Zuführungsleitung 6 für Luft
- einer Zuführungsleitung 7 für Kühlwasser.
   (Aus Übersichtlichkeitsgründen sind jeweils nur die Bezugszeichen für die oberste Einheit eingezeichnet.)

Sämtliche Zu- bzw. Abführungsleitungen sind zur Abtrennung von den zugehörigen Sammelleitungen mit Absperrarmaturen ausgestattet. An Sammelleitungen für die Zu- und Abführung sind vorhanden:
- eine Sammelleitung zur Wälzgaszuführung 8
- eine Sammelleitung zur Wälzgasabführung 9
- eine Sammeleleitung zur Luftzuführung 10
- eine Sammelleitung zur Kühlwasserzuführung 11.

Zur Durchführung des erfindungsgemäßen Verfahrens zur Verwertung von Gemischen aus brennbaren organischen Substanzen und Ton oder Kohleton werden Rohlinge in die Kammern 1 eingebracht und durch direkten Kontakt mit dem im Kreislauf geführten Wälzgas in mehreren Behandlungsstufen auf folgende Weise behandelt:
a) Es erfolgt eine Aufheizung und Trocknung bei Temperaturen bis zu etwa 200 °C, wobei der durch die Trocknung entbundene bzw. freigesetzte Wasserdampf vom Wälzgas aufgenommen wird;
b) anschließend wird auf Temperaturen bis zu etwa 700 °C erhitzt, wobei die Pyrolyse der brennbaren Bestandteile unter Freisetzen der flüchtigen Bestandteile erfolgt und die keramische Verfestigung in einer wasserdampfhaltigen, reduzierenden Atmospäre einsetzt, und wobei die freigesetzten flüchtigen Bestandteile vom Wälzgas aufgenommen werden, und in den flüchtigen Bestandteilen enthaltene umweltrelevante Kohlenwasserstoffe, wie z.B. Teerdämpfe, im Zuge der Aufheizung des im Kreislauf geführten Wälzgases mit dem im Wälzgas enthaltenen Wasserdampf zu einfachen, bei normaler Handhabung, nicht umweltrelevanten Stoffen wie H₂, CO, CH₄ und weiteren nicht kondensierbaren Kohlenwasserstoffen umgesetzt werden;
c) anschließend wird bei Temperaturen zwischen 700 °C und 900 °C ein nach der Pyrolyse im Rohling verbleibender sogenannter Restkohlenstoff mit dem im Wälzgas enthaltenen Wasserdampf und Kohlendioxid zu CO und H₂ umgesetzt, wobei gleichzeitig die keramische Verfestigung der Rohlinge in einer H₂O, CO-und H₂-haltigen Atmosphäre abgeschlossen wird und eine eluatsichere Einbindung der umweltrelevanten Schwermetalle erfolgt, und
d) abschließend werden die verfestigten Rohlinge gekühlt.

An die Sammelleitungen zur Wälzgaszuführung 8 und Wälzgasabführung 9 sind die Kammern 1 in allen Phasen der thermischen Behandlungen a) bis d) angeschlossen. Zur Erzeugung des Wälzgaskreislaufes sind in jeder der Wälzgasabführungsleitungen 5 Fördereinrichtungen 12 angeordnet, die als Dampfinjektor ausgeführt sind.

Zur Zuführung des Treibdampfes zu den Dampfinjektoren dienen Dampfzuführungsleitungen 13, die über die zugehörige Sammelleitung einer Dampfzuführung 14 versorgt werden. Mittels dieser Dampfinjektoren kann die Beaufschlagung der einzelnen Kammern mit Wälzgas und der Wasserdampfanteil im Wälzgas durch Steuerung der Treibdampfmenge eingestellt werden.

Die Abtrennung vom Wälzgassystem erfolgt zur Einbringung und zur Entnahme des Besatzes in Form von Rohlingen.

Die Erhitzung des Wälzgases erfolgt wechselweise in den beiden regenerativ arbeitenden Cowpern 15. Einer dieser Cowper dient zur Wälzgaserhitzung. Dabei erfolgt die Zuführung des Wälzgases über eine Leitung 16 und die Abführung über eine Leitung 17. Bei dem momentan nicht zur Wälzgaserhitzung dienenden Cowper sind die in den Leitungen 16 und 17 vorhandenen Armaturen geschlossen. In diesem Cowper erfolgt die Aufheizung der vorhandenen Speichermasse. Dazu werden dem Cowper über eine Leitung 18 Brenngas und über eine Leitung 19 Verbrennungsluft zugeführt. Die Abführung des dabei gebildeten Verbrennungsgases erfolgt nach der Abgabe der Wärme an die Speichermasse über Leitungen 20 und eine zugehörige Sammelleitung 21. Die Speisung der Brenngaszuführungsleitungen 18 erfolgt aus einer Brenngasleitung 22, die auch zur Abführung des Überschußgases dienen kann. Das Überschußgas kann z.B. zum Betrieb eines Gasmotores oder zur Dampferzeugung verwendet werden. Die Brenngasleitung 22 zweigt von der Wälzgassammelleitung 8, in der sich erhitztes Wälzgas zur anschließenden Aufheizung der Kammern 1 befindet, über ein Ventil ab. Im allgemeinen ist die abgezweigte und brennbare Wälzgasmenge ausreichend zur Aufheizung der Speichermassen in den Cowpern, so daß auf eine Fremdenergie verzichtet werden kann. Nach einer entsprechenden Aufheizung der Speichermasse auf die gewünschte Temperatur wird Wälzgas zu dessen Aufheizung und nachfolgenden Wiederverwendung in den Kammern 1 eingeleitet. Die nach dem Stand der Technik sonst störenden hohen kohligen Bestandteile in den Tonen werden auf diese Weise nutzbringend zur Erzeugung von Brenngas für die Cowper verwendet, wobei gegebenenfalls sogar noch überschüssiges Brenngas anfallen kann. Nur in Fällen, in denen die kohligen Bestandteile zu gering sind, kann es gegebenenfalls erforderlich werden, Fremdenergie zuzuführen.

Das im Kreislauf geführte Wälzgas, das über die jeweilige Zuführungsleitung 4 einer Kammer 1 zugeführt wird, dient einmal zur Abgabe von Wärmeenergie und damit zur Trocknung bzw. Aufheizung der Rohlinge, und zwar in Abhängigkeit von der Temperatur in der jeweiligen Kammer bzw. der jeweiligen Behandlungsstufe. Das Wälzgas wird mit einer Temperatur von z.B. 900 °C in die Kammern eingebracht. Befindet sich die entsprechende Kammer in Stufe b) oder c), d.h. im Pyrolysebereich, dann setzt sich Wasserdampf und CO₂, die in dem Wälzgas enthalten sind, mit dem in den Rohlingen vorhandenen Kohlenstoff um und zwar zu CO und Wasserstoff.

Durch eine gezielte Luftzugabe vor der Einleitung des Wälzgases in die Kammern können im Bedarfsfalle auch noch deutlich höhere Temperaturen wie 900 °C erreicht werden, denn dabei findet eine Teilverbrennung statt. Auf diese Weise läßt sich der Prozeß noch weiter steuern.

Die Austrittstemperaturen des Wälzgases aus den dargestellten vier Kammern, in denen jeweils nacheinander die vier Behandlungstufen a) bis d) durchgeführt werden, hängt von der jeweiligen Behandlungsstufe ab. Die einzelnen Abführungsleitungen 5 münden in eine gemeinsame Sammelleitung 9, von der aus das Wälzgas in die beiden diskontinuierlich arbeitenden Cowpers eingeführt wird. Das in der Sammelleitung 9 geführte Wälzgas ist damit eine Mischung aus Pyrolysegas, das in den Behandlungsstufen b) und c) entstanden ist und Vergasungsgas.

Zur Behandlung des Wälzgases und zu dessen Wiedererwärmung werden die beiden Cowpers 15 jeweils in zwei Phasen betrieben. In einer ersten Phase, wenn kein Wälzgas eingeführt wird, wird Brenngas über die Brenngasleitung 18 und Luft eingeführt. Durch die Umsetzung des Brenngases mit der Luft entsteht ein Verbrennungsgas zur Aufheizung der Speichermasse in dem Cowper 15 auf eine Temperatur von z.B. 1100 °C. Als Brenngas wird Gas aus der Wälzgasleitung 8, das über die Brenngasleitung 22 abgezweigt wird, verwendet. Es stammt praktisch aus dem in der anderen Phase arbeitenden Cowper, der das Wälzgas entsprechend aufgeheizt hat.

Ist die gewünschte Aufheizung erreicht, wird die Brenngaszuführung unterbrochen und Wälzgas aus der Sammelleitung 9 in diesen Cowper eingebracht. Die Wärmeenergie, die in der Speichermasse vorhanden ist, wird in dieser Phase zur Aufheizung des Wälzgases verwendet. Dies derart aufgeheizte Wälzgas wird über die Wälzgassammelleitung 8 wieder den einzelnen Kammern zugeführt, wobei entsprechend für den anderen Cowper über die Leitung 22 ein Teil zur Aufheizung des anderen Cowpers bzw. dessen Versorgung mit Brenngas abgezweigt wird.

Die Zuführung von Luft über die Leitungen 6 zur Kammer 1 ist generell möglich, wird jedoch in der Regel nur genutzt, wenn sich die betreffenden Kammmern in der Phase c) befinden. Die Zuführung des Kühlwassers, das am Besatz in den dampfförmigen Zustand übergeht, erfolgt in der Regel ebenso nur in der Phase d).

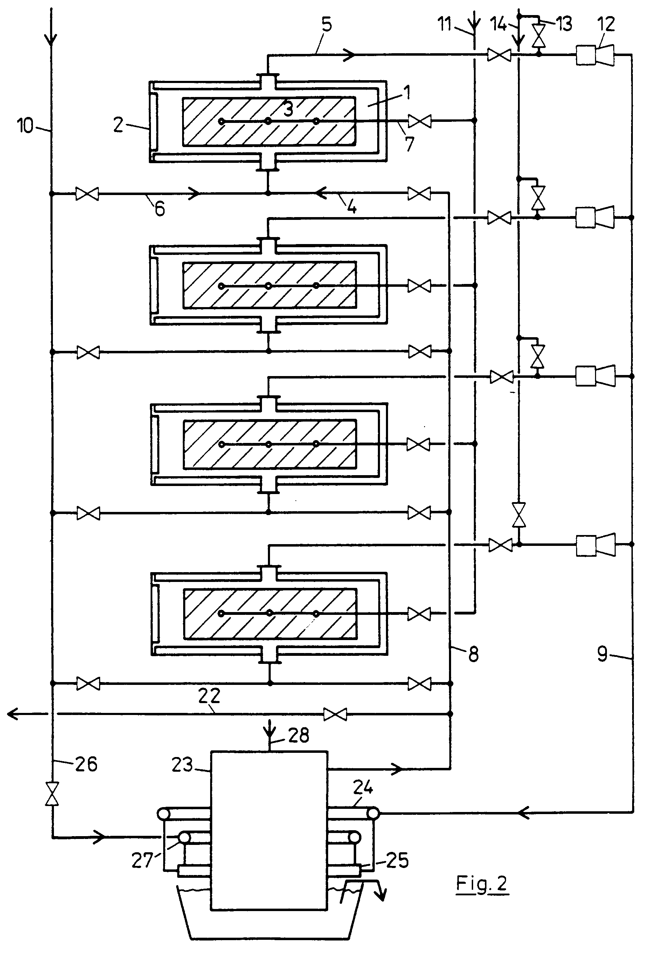

In Fig. 2 ist eine Anlage mit vier Kammern 1 dargestellt, in der die Erhitzung des Wälzgases in einem an sich bekannten Gaswandler 23 (siehe DE 33 17 977) erfolgt. Es genügt deshalb an dieser Stelle die Beschreibung der Wälzgaserhitzung.

Dem Gaswandler 23 wird das zu erhitzende Wälzgas über die Sammelleitung 9, eine Ringleitung 24 und Stutzen 25 zugeführt. Die Zuführung der erforderlichen Vergasungsluft erfolgt über die Sammelleitung 10 für Luft, eine Ringleitung 27 für Luft und die Stutzen 25. Dabei kann die Zusammenführung des Wälzgases und der Vergasungsluft in den Stutzen 25 als Injektor unter Nutzung der Vergasungsluft als Treibmedium ausgeführt sein. Die auf diese Weise erreichte Druckerhöhung vor dem Gaswandler bietet zusätzliche Möglichkeiten zur Erhöhung der Wälzgasmenge. Durch die Teilverbrennung des Wälzgases in dem Gaswandler entsteht eine Wärme, die zur Aufheizung des Wälzgases führt.

Der Gaswandler arbeitet kontinuierlich. Damit entfällt der bei regenerativ arbeitenden Erhitzern erforderliche hohe Aufwand zur Umschaltung von einem Betriebszustand auf den anderen. Diesem Vorteil steht als Nachteil gegenüber, daß durch den in der Vergasungsluft enthaltenen Stickstoffanteil eine Absenkung des Gasheizwertes vom Überschußgas verbunden ist. Weiterhin erfolgt in dem mit Koks gefüllten Gaswandler ein geringer Verbrauch an Koks, dessen Zufuhr über eine Kokszuführung 28 erfolgt.

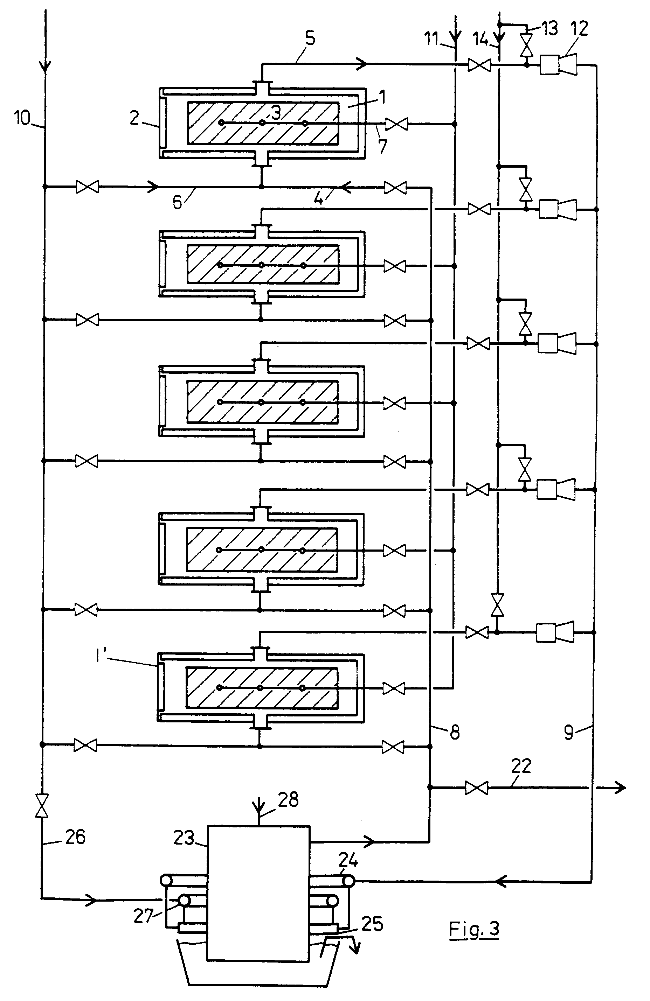

Eine Anlage mit Nacherhitzung und Einsatz eines Gaswandlers 23 zur Wälzgaserhitzung ist in der Fig. 3 dargestellt. Die Nacherhitzung auf über 900 °C stellt eine zusätzliche Behandlungsstufe dar; es wurde deshalb eine 5. Kammer 1' als 5. Behandlungsstufe ergänzt. Durch die 5. Kammer 1' wird die 5. Behandlungsstufe möglich, womit trotz eines Chargenbetriebes der fünf Kammern mit fünf Behandlungsstufen ein weitgehend gleichmäßiger Verfahrensverlauf erreicht wird, da sich jede Kammer, während eines bestimmten Zeitpunktes, in einer anderen Behandlungsstufe befindet.

Der Aufbau und die Arbeitsweise der Anlage gemäß Fig. 3 entspricht weitgehend der Anlage gemäß Fig. 2. Der einzige Unterschied besteht darin, daß die Zuführung der Luft zu den Kammern außer in der Phase c) noch zusätzlich in der Phase der Nacherhitzung in die 5. Stufe erfolgt. Durch die Zuführung von Luft aus der Zuführungsleitung 6 kommt es jeweils zu einer Teilverbrennung in der Kammer, die sich in der Nacherhitzungsstufe befindet, wodurch die Rohlinge auf Temperaturen von z.B. 1100 °C gebracht werden können. Bei diesen Temperaturen gibt es eine noch bessere Einbindung der schädlichen Schwermetalle.

Die dargestellten fünf Kammern symbolisieren die fünf Behandlungsstufen, die jeweils nacheinander in einer Kammer ablaufen, bevor die Rohlinge aus dieser entnommen werden und eine Neübeschickung erfolgt. Dabei sind die fünf Kammern so geschaltet, daß sich jeweils nur eine Kammer in einer bestimmten Behandlungsstufe befindet, womit insgesamt gesehen in allen fünf Kammern zusammen die fünf Behandlungsstufen zum gleichen Zeitpunkt ablaufen.

Gleiches gilt selbstverständlich auch für die in den Fig. 1 und 2 beschriebenen vier Kammern mit vier Behandlungsstufen.

Sowohl bei dem Ausführungsbeispiel nach der Fig. 2 als auch nach Fig. 3 kann überschüssiges Wälzgas über die Leitung 22 abgeführt werden.

Neben der Verwendung und Aufarbeitung von kohligem Ton unter gleichzeitiger Gewinnung von Brenngas kann das erfindungsgemäße Verfahren in einer sehr vorteilhaften Weise auch zur Verwertung oder Entsorgung des bei einer Aufbereitung von Müllabfallstoffen, Sekundär-Rohstoffen oder Rückständen nach dem Pyrolyseverfahren anfallenden Pyrolysekoks eingesetzt werden, der andernfalls weniger nutzbringend verwertet oder entsorgt werden müßte.

## Patentansprüche

1. Verfahren zur Verwertung von Gemischen aus brennbaren organischen Substanzen und Ton oder Kohleton, insbesondere Mischungen aus festen Rückständen der Pyrolyse von Abfallstoffen und Ton oder Kohleton, durch Gewinnung eines teerfreien CO- und H₂-haltigen Brenngases und grobkeramischer Erzeugnisse bzw. Bauteile, wobei die genannten Gemische zu Rohlingen geformt in einer wasserdampfhaltigen reduzierenden Atmosphäre einer Wärmebehandlung bis zu maximal 900 °C unterworfen werden und unter diesen Bedingungen der Anteil des tonigen Materials keramisch verfestigt wird, wobei die Rohlinge in einem Ofenraum oder einer Kammer (1) durch direkten Kontakt mit einem im Kreislauf geführten, vor diesem Kontakt in einem Wälzgaserhitzer (15, 23) aufgeheizten, Wasserdampf enthaltenden Wälzgas nacheinander
a) bei Temperaturen bis zu etwa 200 °C aufgeheizt und getrocknet werden, wobei der durch die Trocknung entbundene Wasserdampf vom Wälzgas aufgenommen wird.
b) auf Temperaturen bis zu etwa 700 °C erhitzt werden, wobei die Pyrolyse der brennbaren Bestandteile unter Freisetzung der flüchtigen Bestandteile erfolgt und die keramische Verfestigung in einer wasserdampfhaltigen, reduzierenden Atmosphäre einsetzt, und wobei die freigesetzten flüchtigen Bestandteile vom Wälzgas aufgenommen werden, und in den flüchtigen Bestandteilen enthaltene umweltrelevante Kohlenwasserstoffe, wie z.B. Teerdämpfe, im Zuge der Aufheizung des im Kreislauf geführten Wälzgases mit dem im Wälzgas enthaltenen Wasserdampf zu einfachen, bei normaler Handhabung, nicht umweltrelevanten Stoffen wie H₂, CO, CH₄ und weiteren nicht kondensierbaren Kohlenwasserstoffen umgesetzt werden,
c) bei Temperaturen zwischen 700 °C und 900 °C ein nach der Pyrolyse im Rohling verbleibender sogenannter Restkohlenstoff mit dem im Wälzgas enthaltenen Wasserdampf und Kohlendioxid zu CO und H₂ umgesetzt wird, wobei gleichzeitig die keramische Verfestigung der Rohlinge in einer H₂O, CO- und H₂-haltigen Atmosphäre abgeschlossen wird und eine eluatsichere Einbindung der umweltrelevanten Schwermetalle erfolgt, und
d) anschließend die verfestigten Rohlinge gekühlt werden.

2. Verfahren nach Anspruch 1,
**dadurch gekennzeichnet,** daß die in der Phase c) gebildeten verfestigten Rohlinge vor der Kühlphase d) einer Nacherhitzung auf Temperaturen über 900 °C unterzogen werden, um die eluatsichere Einbindung der umweltrelevanten Schwermetalle weiter zu vervollständigen.

3. Verfahren nach Anspruch 1 oder 2,
**dadurch gekennzeichnet,** daß dem Wälzgas Wasserdampf in einer solchen Menge zugeführt wird, daß in der Phase c) ein Wasserdampfgehalt von vorzugsweise 30 % eingehalten wird.

4. Verfahren nach Anspruch 1 oder 2,
**dadurch gekennzeichnet,** daß die Zuführung von Wasserdampf zum Wälzgas teilweise durch Injektion von Wasser oder Wasserdampf in das Wälzgas über Dampfzuführungsleitungen (13) vor dessen Eintritt in den Wälzgaserhitzer (15) oder (23) erfolgt.

5. Verfahren nach Anspruch 1 oder 2,
**dadurch gekennzeichnet,** daß die Zuführung von Wasserdampf zum Wälzgas teilweise dadurch erfolgt, daß bei der Kühlung der verfestigten Rohlinge Wasser in die Kammer (1) eingedüst wird.

6. Verfahren nach einem der Ansprüche 1 bis 5,
**dadurch gekennzeichnet,** daß ein Teilstrom des Wälzgases nach dem Passieren des Wälzgaserhitzers (15,23) aus dem Kreislauf als Überschußgas oder Brenngas abgezogen und einer weiteren Verwendung zugeführt wird, wobei dieser Teilstrom so bemessen wird, daß in der Kammer (1) ein ausreichend hoher Überdruck konstant eingehalten wird.

7. Verfahren nach einem der Ansprüche 1 bis 6,
**dadurch gekennzeichnet,** daß dem im Wälzgaserhitzer (15,23) aufgeheizten Wälzgas während der Phase c) oder während der Phase c) und der Phase der Nacherhitzung Sauerstoff in Form von technischen Sauerstoff, Luft oder einem anderen sauerstoffhaltigen Gasgemisch in einer Menge bis zu 7 % Sauerstoff, bezogen auf den wasserdampfhaltigen Wälzgasstrom, zugesetzt wird.

8. Verfahren nach Anspruch 7,
**dadurch gekennzeichnet,** daß 1 bis 3 % Sauerstoff bezogen auf den wasserdampfhaltigen Wälzgasstrom zugesetzt werden.

9. Verfahren nach Anspruch 7 und 8,
**dadurch gekennzeichnet,** daß der Sauerstoffzusatz zum Wälzgas nach dem Wälzgaserhitzer (15,23) und vor Eintritt in die Kammer (1) erfolgt.

10. Verfahren nach einem der Ansprüche 1 bis 9,
**dadurch gekennzeichnet,** daß der Wälzgaserhitzer (15) regenerativ arbeitet und mit Gas beheizt wird.

11. Verfahren nach Anspruch 6,
**dadurch gekennzeichnet,** daß der abgezogene Teilstrom des Wälzgases zu einem Teil ohne weitere Kühlung zur Beheizung des Wälzgaserhitzers (15) verwendet wird.

12. Verfahren nach Anspruch 6,
**dadurch gekennzeichnet,** daß der aus dem Wälzgas abgezogene Teilstrom vor der weiteren Verwendung als Brenngas gekühlt und einer Gasreinigung unterworfen wird.

13. Verfahren nach einem der Ansprüche 1 bis 12,
**dadurch gekennzeichnet,** daß die Aufheizung des Wälzgases in einem Gaswandler (23) durch Teilverbrennung mit Luftsauerstoff erfolgt.

14. Verfahren nach einem der Ansprüche 1 bis 13,
**dadurch gekennzeichnet,** daß die Rohlinge relativ zum Ofenraum bzw. zur Kammer (1) ruhen und die einzelnen Phasen des Verfahrens zeitlich nacheinander jeweils in einer Kammer (1) durchlaufen.

15. Verfahren nach Anspruch 14,
**dadurch gekennzeichnet,** daß mehrere Kammern (1) gleichzeitig aber zeitlich so versetzt betrieben werden, daß sich zu jedem Zeitpunkt mindestens eine der Kammern in der Phase c) befindet.

16. Verfahren nach Anspruch 14 und 15,
**dadurch gekennzeichnet,** daß das Wälzgas nach Verlassen der Kammern (1) zusammengeführt, gemeinsam erhitzt und wieder auf die einzelnen Kammern verteilt wird.

17. Verfahren nach einem der Ansprüche 1 bis 16,
**dadurch gekennzeichnet,** daß die Rohlinge durch einen Ofenraum geführt werden und die einzelnen Phasen des Verfahrens nacheinander an einer für die einzelnen Phasen charakteristischen Stelle des Ofenraumes ablaufen.

18. Vorrichtung zur Durchführung des Verfahrens nach einem der Ansprüche 1 bis 17, wobei
mehrere Kammern (1) zu einer Batterie vereinigt sind, und
e) die Kammern (1) über Zuführungsleitungen (4) und eine Sammelleitung (8) für Wälzgas auf der Heißgasseite und über Abführungsleitungen (5) und eine Sammelleitung (9) für Wälzgas auf der Kaltgasseite mit einem gemeinsamen Wälzgaserhitzer (15,23) oder einer gemeinsamen, aus parallel geschalteten Apparaten bestehenden Gruppe von Wälzgaserhitzern verbunden sind,
f) eine Luftzuführungsleitung (6) für die Kammern (1) und eine zugehörige Sammelleitung (10) zur Luftzuführung vorgesehen ist,
g) eine Wasserzuführungsleitung (7) und eine zugehörige Sammelleitung (11) für die Kammern (1) vorgesehen ist,
h) als Fördereinrichtungen für das Wälzgas in jeder Abführungsleitung (5) ein Dampfinjektor (12) eingesetzt ist und der erforderliche Treibdampf über die Sammelleitung (14) zur Dampfzuführung und die Zuführungsleitungen (13) für Dampf zugeführt ist und zur Einstellung der Beaufschlagung der Kammern (1) mit Wälzgas genutzt ist, und
i) eine Leitung (22) für überschüssiges Brenngas vorgesehen ist,
und wobei jede Kammer (1) mit mindestens einer gasdicht verschließbaren Öffnung (2) zum Beschicken und Entleeren sowie entsprechenden Stutzen zur Zu- und Abführung des Wälzgases und zur Zuführung des Kühlwassers versehen ist.

19. Vorrichtung nach Anspruch 18,
**dadurch gekennzeichnet,** daß zur regenerativen Aufheizung des Wälzgases wechselnd betriebene Cowper (15) vorgesehen sind; für die Zu- und Abführung des Wälzgases Leitungen (16) bzw. (17) und zur Zuführung von Brenngas und Brennluft Leitungen (18) bzw. (19), sowie zur Abführung des Verbrennungsgases Leitungen (29) und (21) vorgesehen sind.

20. Vorrichtung nach Anspruch 18,
**dadurch gekennzeichnet,** daß ein Gaswandler (23) zur Aufheizung des Wälzgases mit einer Ringleitung (24) für Wälzgas und mit einer Leitung (26) und einer Ringleitung (27) für Vergasungsluft versehen ist, und daß zur Zuführung der Vergasungsluft und des aufzuheizenden Wälzgases in Zuführungsstutzen (25) angeordnete Injektormischer unter Nutzung der Vergasungsluft als Treibmittel vorgesehen sind.

## Claims

1. Process for recycling mixtures of combustible organic substances and clay or culm clay, in particular mixtures of solid residues from the pyrolysis of waste and clay or culm clay, by recovering a tar-free CO- and H₂-containing combustion gas and heavy clay products or components, the said mixtures being moulded into blanks and subjected to heat treatment up to a maximum of 900°C in a water vapour-containing reducing atmosphere and the clayey material fraction being ceramically strengthened under these conditions, wherein, in a furnace chamber or a chamber (1) by means of direct contact with a water vapour-containing circulated gas heated in a circulated-gas heater (15, 23) prior to this contact, the blanks are successively
a) heated and dried at temperatures of up to approximately 200°C, the water vapour released by the drying being absorbed by the circulated gas, and
b) heated to temperatures of up to approximately 700°C, the pyrolysis of the combustible constituents being effected with the release of the volatile constituents and the ceramic strengthening taking place in a water vapour-containing reducing atmosphere, and the volatile constituents released being absorbed by the circulated gas and toxic hydrocarbons contained in the volatile constituents, e.g. tar vapours, being converted during the heating of the circulated gas together with the water vapour contained in the circulated gas into simple substances which are non-toxic during normal handling, such as H₂, CO, CH₄ and other non-condensable hydrocarbons,
c) at temperatures of between 700°C and 900°C, what is referred to as residual carbon remaining in the blank after pyrolysis is converted together with the water vapour contained in the circulated gas and carbon dioxide to CO and H₂, the ceramic strengthening of the blanks in an H₂O-, CO- and H₂-containing atmosphere simultaneously being terminated and toxic heavy metals being incorporated in an eluate-proof manner, and
d) the strengthened blanks are then cooled.

2. Process according to claim 1, characterised in that the strengthened blanks formed in phase c) are subjected prior to the cooling phase d) to subsequent heating to temperatures in excess of 900°C in order to complete the eluate-proof incorporation of toxic heavy metals.

3. Process according to claim 1 or claim 2, characterised in that water vapour is supplied to the circulated gas in such a quantity that a water vapour content of preferably 30 % is maintained in phase c).

4. Process according to claim 1 or claim 2, characterised in that water vapour is supplied to the circulated gas partly by injecting water or water vapour into the circulated gas via water vapour supply lines (13) before it enters the circulated-gas heater (15) or (23).

5. Process according to claim 1 or claim 2, characterised in that water vapour is supplied to the circulated gas partly by spraying water into the chamber (1) during the cooling of the strengthened blanks.

6. Process according to one of claims 1 to 5, characterised in that, after passing through the circulated-gas heater (15, 23), a partial stream of the circulated gas is drawn off from the circuit as excess gas or combustion gas and is advanced for further use, this partial stream having a magnitude such that sufficiently high excess pressure is maintained constantly in the chamber (1).

7. Process according to one of claims 1 to 6, characterised in that oxygen in the form of technical oxygen, air or another oxygen-containing gaseous mixture is added to the circulated gas heated in the circulated-gas heater (15, 23) during phase c) or during phase c) and the subsequent heating phase in a quantity of up to 7 % oxygen in relation to the water vapour-containing circulated gas stream.

8. Process according to claim 7, characterised in that 1 to 3 % oxygen in relation to the water vapour-containing circulated gas stream is added.

9. Process according to claims 7 and 8, characterised in that the oxygen is added to the circulated gas downstream of the circulated-gas heater (15, 23) and before it enters the chamber (1).

10. Process according to one of claims 1 to 9, characterised in that the circulated-gas heater (15) operates regeneratively and is heated with gas.

11. Process according to claim 6, characterised in that the partial stream of circulated gas drawn off is used partly without further cooling for heating the circulated-gas heater (15).

12. Process according to claim 6, characterised in that the partial stream drawn off from the circulated gas is cooled and subjected to gas purification before being used further as a combustion gas.

13. Process according to one of claims 1 to 12, characterised in that the circulated gas is heated in a gas converter (23) by partial combustion with atmospheric oxygen.

14. Process according to one of claims 1 to 13, characterised in that the blanks are stationary relative to the furnace chamber or the chamber (1) and the individual phases of the process follow one another in time in one chamber (1).

15. Process according to claim 14, characterised in that a plurality of chambers (1) are operated simultaneously but staggered over time in such a manner that at least one of the chambers is situated in phase c) at any given point in time.

16. Process according to claims 14 and 15, characterised in that, after leaving the chambers (1), the circulated gas is brought together, heated and then distributed to the individual chambers again.

17. Process according to one of claims 1 to 16, characterised in that the blanks are guided through a furnace chamber and the individual phases of the process follow one another at particular points of the furnace chamber for each of the individual phases.

18. Apparatus for carrying out the process according to one of claims 1 to 17, in which a plurality of chambers (1) are combined to form a battery, and
e) the chambers (1) are connected via supply lines (4) and a manifold (8) for circulated gas on the hot-gas side and via discharge lines (5) and a manifold (9) for circulated gas on the cold-gas side to a common circulated-gas heater (15, 23) or a common group of circulated-gas heaters consisting of devices connected in parallel,
f) an air supply line (6) for the chambers (1) and an associated manifold (10) for the air supply are provided,
g) a water supply line (7) and an associated manifold (11) for the chambers (1) are provided,
h) a steam injector (12) is inserted into each discharge line (5) as conveyor means for the circulated gas and the required motive steam is supplied via the manifold (14) for supplying steam and the supply lines (13) for steam and is used to adjust the quantity of circulated gas applied to the chambers (1), and
i) a line (22) for excess combustion gas is provided,
and in which each chamber (1) is provided with at least one opening (2) which can be closed in a gastight manner for loading and emptying, as well as corresponding ports for the supply and discharge of the circulated gas and the supply of the cooling water.

19. Apparatus according to claim 18, characterised in that alternating Cowpers (15) are provided for the regenerative heating of the circulated gas, lines (16) and (17) are provided for the supply and discharge of the circulated gas and lines (18) and (19) are provided for the supply of combustion gas and combustion air, and lines (29) and (21) are provided for the discharge of the combustion gas.

20. Apparatus according to claim 18, characterised in that a gas converter (23) for heating the circulated gas is provided with a ring line (24) for circulated gas and with a line (26) and a ring line (27) for gasifying air and that injector mixers arranged in supply ports (25) are provided for supplying the gasifying air and the circulated gas to be heated, using the gasifying air as a motive fluid.

## Revendications

1. Procédé de valorisation de mélanges de substances combustibles organiques et d'argile ou d'argile au carbone, en particulier des mélanges de résidus solides de la pyrolyse de déchets et d'argile ou d'argile au carbone, par production d'un gaz combustible contenant du CO et de l'H₂ et exempt de goudron et de produits en céramique brut, par exemple des matériaux de construction, selon lequel lesdits mélanges sont façonnés en forme d'ébauches dans une atmosphère réductrice contenant de la vapeur d'eau et sont soumis à un processus de traitement thermique allant jusqu'à 900°C au maximum, et selon lequel, dans ces conditions la part de matériau contenant de large est stabilisée sous forme de céramique, selon lequel les ébauches, disposées dans la chambre d'un four ou dans une enceinte (1), en contact direct avec le gaz de turbine contenant de la vapeur d'eau, circulant dans un circuit et réchauffé préalablement à ce contact direct dans un dispositif de chauffage du gaz de turbine (15, 23) sont successivement :
a) chauffés et séchés à une température allant jusqu'à 200°C, la vapeur d'eau libérée par séchage étant séparée du gaz de turbine.
b) élevés à des températures allant environ jusqu'à 700°C, la pyrolyse des composants combustibles libérant les composants volatiles et assurant une solidification à l'état de céramique dans une atmosphère réductrice contenant de la vapeur d'eau, les composants volatiles étant récupérés par le gaz de turbine, les hydrocarbures polluants contenus dans les composants volatiles, comme par exemple les vapeurs de goudron, étant réduits dans le circuit des gaz de turbine au cours de leur chauffage en présence de la vapeur d'eau qu'ils contiennent, pendant un processus de traitement normal, étant transformés en composés non polluants tels que H₂, CO, CH₄ et en d'autres hydrocarbures non condensables,
c) un hydrocarbure résiduel contenu dans l'ébauche après la pyrolyse étant décomposé en CO et H₂ en présence de la vapeur d'eau et du dioxyde de carbone contenus dans le gaz de turbine, à des températures comprises entre 700°C et 900°C, la solidification de la céramique s'effectuant simultanément dans une atmosphère contenant de l'H₂O, du CO et de l'H₂ en réalisant un enrobage sûr des métaux lourds polluants, et
d) les ébauches étant simultanément refroidies.

2. Procédé selon la revendication 1, caractérisé en ce que les ébauches solidifiées au cours de la phase c) sont soumises avant la phase de refroidissement d) à un réchauffement à une température de 900°, pour parfaire l'enrobage étanche des métaux lourds polluants.

3. Procédé selon les revendications 1 ou 2, caractérisé en ce que le gaz de turbine est amené dans une telle quantité qu'au cours de la phase c) on respecte une teneur de vapeur d'eau de 30%.

4. Procédé selon les revendications 1 ou 2, caractérisé en ce que l'adjonction de vapeur d'eau au gaz de turbine se fait partiellement par injection d'eau ou de vapeur d'eau par des conduits d'amenée de vapeur (13) dont l'entrée s'effectue dans le dispositif de chauffage (15) ou (23) du gaz de turbine.

5. Procédé selon les revendications 1 ou 2, caractérisé en ce que l'adjonction de vapeur d'eau au gaz de turbine se fait partiellement par le fait que lors de la solidification des ébauches on pulvérise de l'eau dans la chambre (1).

6. Procédé selon les revendications 1 à 5, caractérisé en ce que l'on dérive un flux partiel du gaz de turbine après le passage dans le dispositif de chauffage (15, 23) du gaz de turbine, du circuit comme gaz de réserve ou gaz combustible en vue d'une autre utilisation, ce flux partiel étant déterminé de telle manière qu'il règne dans la chambre (1) une surpression constante suffisante.

7. Procédé selon les revendications 1 à 6, caractérisé en ce que l'on ajoute au gaz de turbine réchauffé au cours de la phase c) ou au cours de la phase c) et de la phase de réchauffement postérieur dans le dispositif de chauffage du gaz de turbine (15, 23) de l'oxygène sous forme d'oxygène technique, de l'air ou un autre mélange gazeux contenant de l'oxygène, dans la proportion de 7% par rapport au gaz de turbine contenant de la vapeur d'eau.

8. Procédé selon la revendication 7, caractérisé en ce que l'on ajoute de 1 à 3 % d'oxygène par rapport au gaz de turbine contenant de la vapeur d'eau.

9. Procédé selon les revendications 7 et 8, caractérisé en ce que l'addition d'oxygène se fait après le dispositif de chauffage du gaz de turbine (15, 23) et avant l'entrée dans la chambre (1).

10. Procédé selon les revendications 1 à 9, caractérisé en ce que le dispositif de chauffage du gaz de turbine (15) travaille par régénération et est chauffé avec du gaz.

11. Procédé selon la revendication 6, caractérisé en ce que le flux partiel de gaz de turbine dérivé est en partie utilisé sans autre refroidissement pour chauffer le dispositif de chauffage (15) de gaz de turbine.

12. Procédé selon la revendication 6, caractérisé en ce que le flux partiel dérivé du gaz de turbine est refroidi et purifié avant d'être utilisé comme gaz combustible.

13. Procédé selon l'une des revendications 1 à 12, caractérisé en ce que le réchauffement du gaz de turbine s'effectue dans un convertisseur de gaz (23) par combustion partielle en présence de l'oxygène de l'air.

14. Procédé selon l'une des revendications 1 à 13, caractérisé en ce que les ébauches sont au repos par rapport au four, respectivement à la chambre (1), et en ce que les phases individuelles du procédé se déroulent successivement dans une chambre (1).

15. Procédé selon la revendication 14, caractérisé en ce que l'on utilise plusieurs chambres (1) simultanément, mais de façon décalée de telle manière qu'au moins une des chambres se trouve à chaque instant dans la phase c).

16. Procédé selon les revendications 14 et 15, caractérisé en ce que le gaz de turbine est collecté lorsqu'il quitte les chambres (1), chauffé en commun et redistribué dans les chambres individuelles.

17. Procédé selon l'une des revendications 1 à 16, caractérisé en ce que les ébauches sont conduites à travers un four et en ce que les phases individuelles du procédé se déroulent en des endroits spécifiques du four pour chacune des phases individuelle.

18. Dispositif pour la mise en oeuvre du procédé selon l'une des revendications 1 à 17, dans lequel plusieurs chambres (1) sont assemblées en batterie, et
e) dans lequel les chambres (1) sont couplées à un dispositif commun (15, 23) de chauffage de gaz de turbine ou à des appareils connectés en parallèle et composés de groupes de dispositifs de chauffage de gaz de turbine, par l'intermédiaire de conduits d'amenée (4) et d'un conduit collecteur (8) de gaz de turbine du coté du gaz chaud et par l'intermédiaire de conduits d'évacuation (5) et d'un conduit collecteur (9) de gaz de turbine du coté du gaz froid,
f) comportant un conduit d'amenée d'air (6) pour les chambres (1) et un conduit collecteur correspondant (10) pour amener de l'air,
g) comportant un conduit d'amenée d'eau (7) et un conduit collecteur correspondant (11) pour les chambres (1),
h) comportant un injecteur de vapeur d'eau (12) dans chaque conduit d'évacuation (5) constituant un dispositif d'alimentation pour le gaz de turbine, le gaz propulseur requis étant amené par le conduit collecteur (14) vers l'amenée de vapeur et le conduit d'amenée (13) pour alimenter les chambres (1) en gaz de turbine, et
i) comportant un conduit (22) pour le surplus de gaz combustible,
et dans lequel chaque chambre (1) comporte au moins une ouverture (2) pouvant être obturée de façon étanche aux gaz pour permettre le revêtement, la vidange, ainsi que l'assistance pour l'alimentation et l'évacuation du gaz de turbine et pour l'amenée de l'eau de refroidissement.

19. Dispositif selon la revendication 18, caractérisé en ce que pour un chauffage régénéré du gaz de turbine, des systèmes Cowper (15) sont prévus et en ce qu'il comporte des conduits (16), respectivement (17) pour l'amenée et l'évacuation du gaz combustible et des conduits (18) respectivement (19) pour l'air de combustion, ainsi que des conduits (29) et (21) pour les gaz d'échappement.

20. Dispositif selon la revendication 18, caractérisé en ce qu'il comporte un convertisseur de gaz (23) pour le chauffage du gaz de turbine et un conduit annulaire (24) pour le gaz de turbine et un conduit (26) et un conduit annulaire (27) pour l'air de combustion, et en ce qu'il comprend également dans des embouts d'amenée (25) des mélangeurs-injecteurs qui utilisent l'air de combustion comme gaz propulseur pour amener l'air de combustion et le gaz de turbine à réchauffer.
